# EUROPÄISCHE PATENTSCHRIFT

(11) **EP 2 447 043 B1**
(45) Veröffentlichungstag und Bekanntmachung des Hinweises auf die Patenterteilung: **06.01.2016**
(21) Anmeldenummer: 11185659.7
(22) Anmeldetag: 18.10.2011
(51) Int. Cl.: B29C 65/18, B65B 9/213, B65B 9/207, B65B 51/30

(54) **Verfahren zur energieeffizienten Siegelung von einem Folienschlauch**
Method for the energy-efficient sealing of tubular web
Procédé de scellement de gaine économe en énergie

(30) Priorität: 02.11.2010 DE 102010050008
(43) Veröffentlichungstag der Anmeldung: 02.05.2012
(73) Patentinhaber: Rovema GmbH, 35463 Fernwald-Annerod (DE)
(72) Erfinder: Lutz, Erhard, 35325 Mücke-Sellnrod (DE); Braun, Harald, 35305 Grünberg (DE); Lachenmaier, Sepp Dr., 42329 Wuppertal (DE)
(74) Vertreter: advotec.

(56) Entgegenhaltungen:
- EP-A1- 0 890 515
- EP-A2- 0 368 016
- EP-A2- 2 441 570
- DE-A1- 2 255 762
- FR-A- 1 216 127
- US-A- 5 279 098

## Beschreibung

Die vorgeschlagene Neuerung betrifft den Verpackungsmaschinenbau und dort ein Verfahren zum Erzeugen einer Schweißkraft bzw. eines Schweißdruckes für eine Schweißbacke, insbesondere einer Schweißbacke einer Quersiegelstation einer vertikalen Schlauchbeutelmaschine.

Aus der DE 44 25 207 A ist es bekannt, eine Schweißbacke einer Quersiegelstation einer vertikalen Schlauchbeutelmaschine entlang einer geschlossenen Bahn zu bewegen. Dabei weist die Bahn einen geraden Abschnitt auf, welcher zum Anliegen an einem zwischen der Schweißbacke und einer zweiten, gegenläufigen Schweißbacke zusammengedrückten Folienschlauches vorgesehen ist. Dabei werden der Folienschlauch und die Schweißbacken in Richtung des geraden Abschnittes mit gleicher oder unterschiedlicher Geschwindigkeit weiterbewegt, um den Folienschlauch mittels über die Siegelflächen der Schweißbacken in den Folienschlauch eingebrachter Wärme bei einem ausgeübten Druck in einer Siegelebene unter einer Siegelkraft innerhalb einer Siegelzeit zu verschweißen. Dabei ist ein Antrieb dazu vorgesehen, die Schweißbacke in einer Normalrichtung zu einer Oberfläche des Widerstandes hin zu bewegen, um derart den Schweißvorgang ortsfest oder entlang eines effektiven Siegelweges innerhalb der Siegelzeit durchzuführen, und die Siegelkraft kann vorgewählt werden.

Bei einer anderen vertikalen Schlauchbeutelmaschine ist lediglich ein Antrieb dazu vorgesehen, zwei nur in horizontaler Richtung aufeinander zu und voneinander weg bewegbare Schweißbacken entlang jeweils einer linienförmigen Bahn zu bewegen, um einen Folienschlauch jeweils bei einem Folienstillstand quer zu seiner Transportrichtung zu verschweißen.

Die DE 10 2004 049 376 A1 beschreibt ein Siegelverfahren, bei dem die Siegelkraft von einer Steuereinrichtung des Antriebs während der Siegelzeit vorgegeben wird und somit in beliebiger Weise während der gesamten Siegelzeit zeitabhängig vorwählbar ist.

Die bekannten Verfahren und Vorrichtungen haben den Nachteil, dass die Siegelkraftkurve bzw. der sich aus dem Betrag der Siegelfläche und der Siegelkraft ergebende Siegeldruckkurve stets nur ein relatives Maximum aufweist.

Bei dem in der DE 10 2004 049 376 A1 beschriebenen Verfahren durchläuft die Siegelkraftkurve einen parabelförmigen Verlauf. Alle bekannten Verfahren sind gemeinsam dadurch gekennzeichnet, dass der Kurvenverlauf der Siegelkraftkurve bis zu einer Maximalkraft ansteigt, bei dieser Maximalkraft eventuell für eine bestimmte Zeit konstant gehalten wird und anschließend entlang der Siegelkraftkurve bis auf den Nullwert beim Öffnen der Backen zurückgeht. Charakteristisch ist dabei, dass die Siegelkraft bis zum Erreichen der Maximalsiegelkraft permanent ansteigt, wobei dieser Anstieg der Siegelkraft bis zum Erreichen der Maximalkraft einen linearen, kreisabschnittsförmigen oder parabelförmigen Siegelkraftverlauf aufweisen kann. Üblicherweise wird bei dem bekannten Siegelverfahren angestrebt, dass die Maximalkraft möglichst bald erreicht wird, was bedeutet, dass die Siegelkraft nach Schließen der Siegelbacken mit einer möglichst großen Steigung erhöht werden soll. Untersuchungen haben nun gezeigt, dass diese Art des Siegelns ineffizient ist und unnötigen Aufwand hinsichtlich des Energiebedarfs bzw. der Maschinenausstattung bedeutet. Denn Analysen der während der Siegelung ablaufenden Prozesse haben gezeigt, dass für die Erwärmung des Folienschlauches an sich nur ein relativ geringer Siegeldruck erforderlich ist. Erst wenn der Folienschlauch eine Temperatur erreicht hat, so dass er zumindest teilweise plastifiziert ist, muss die Siegelkraft auf das bisher bekannte Niveau erhöht werden, um für eine sichere Versiegelung zu sorgen. Dies bedeutet mit anderen Worten, dass einem bisher bekannten Siegelverfahren während des Erwärmens des Folienschlauches bei geschlossenen Schweißbacken eine unnötig hohe Kraft aufgebracht wurde, so dass in diesem Teil des Siegelprozesses unnötige Antriebsenergie aufgewendet werden musste. Außerdem musste der Antrieb zur Aufbringung der Siegelkraft auf die entsprechende hohe Dauerbelastung ausgelegt werden.

Aus der FR 1 216 127 A ist es bekannt, dass eine zu hohe Siegelkraft zu einer Verschlechterung der Schweißverbindung führt, da das weitgehend geschmolzene Kunststoffmaterial in dem Falle aus der Schweißverbindung verdrängt wird. Entgegen der entsprechend der Schweißbacken vorgesehenen Breite der Schweißnaht entsteht folglich nur ein schmaler verschweißter Streifen beidseitig der Schweißbacken. Wird jedoch eine geringe Schweißkraft eingesetzt, so kann eine hinreichende Verschweißung erreicht werden, jedoch kann somit keine optisch einwandfreie Schweißnaht erzielt werden. Daher schlägt die Schrift vor, die eigentliche Verschweißung bis zur einsetzenden Erstarrung des im Schweißprozess geschmolzenen Kunststoffes bei niedrigem Schweißdruck durchzuführen und nach dem Schweißprozess den Druck erheblich zu erhöhen, wodurch das halbplastische Kunststoffmaterial in Form gepresst wird.

Problematisch ist jedoch hinsichtlich der Belastung und Auslegung der Schweißvorrichtung, dass die Formung des teilweise erstarrten Kunststoffmaterials erheblich höhere Presskräfte erfordert und somit den Anlagenaufwand intensiviert.

Einen anderen Ansatz bei vergleichbarem Verlauf der von der Schweißvorrichtung auf die Kunststofffolien aufgebrachten Pressung offenbart die Druckschrift EP 2 441 570 A2. Hier wird zur Verbesserung der Qualität der Siegelnaht, insbesondere der Verhinderung von Einschlüssen in der Siegelnaht, zunächst eine Temperierung bei geringerer Schweißkraft vorgeschlagen. Dieses ermöglicht ein besseres Entweichen von beispielsweise Flüssigkeiten aus dem Bereich der Siegelnaht. Erst nach einer Haltezeit wird der Druck und die Temperatur erhöht, so dass die eigentliche Verschweißung unter teilweisem Schmelzen der zu verschweißenden Kunststofffolien einsetzt.

Ausgehend von diesem Stand der Technik ist es deshalb Aufgabe der vorliegenden Erfindung ein neues Siegelverfahren zur Erzeugung einer Schweißkraft bzw. eines Schweißdruckes für eine Schweißbacke, insbesondere eine Schweißbacke einer Quersiegelstation in einer vertikalen Schlauchbeutelmaschine, vorzuschlagen, das mit hoher Energieeffizienz und bei verringertem Anlagenaufwand durchgeführt werden kann.

Diese Aufgabe wird durch ein Verfahren nach der Lehre des Anspruchs 1 gelöst.

Bevorzugte Ausführungsformen der Erfindung sind Gegenstand der Unteransprüche.

Das erfindungsgemäße Siegelverfahren beruht auf dem Grundgedanken, dass die auf den Folienschlauch wirkende Siegelkraftkurve ein erstes relatives Siegelkraftmaximum und ein zweites relatives Siegelkraftmaximum aufweist, wobei die Siegelkraft des zweiten Siegelkraftmaximums höher ist als die Siegelkraft beim ersten Siegelkraftmaximum. Dies bedeutet mit anderen Worten, dass beim Siegeln des Folienschlauchs und des damit verbundenen Durchlaufen der Siegelkraftkurve die Siegelkraft zunächst bis zum ersten Siegelkraftmaximum ansteigt. Nach Erreichen des ersten Siegelkraftmaximums kann die Siegelkraft entweder konstant gehalten werden oder auch um ein gewisses Maß abfallen. Erst im weiteren Verlauf steigt die Siegelkraft dann bis zum zweiten Siegelkraftmaximum an, wobei die Siegelkraft des zweiten Siegelkraftmaximums höher ist als die Siegelkraft des ersten Siegelkraftmaximums. Dabei ist es selbstverständlich auch denkbar, dass noch weitere Siegelkraftmaxima durchlaufen werden. Ganz grundsätzlich ist im Hinblick auf die Erfindung darauf hinzuweisen, dass die Größen Siegelkraft, Siegeldruck und Motorantriebsleistung der Siegelbacken als korrelierende Parameter anzusehen sind.

Durch das Vorschalten des ersten Siegelkraftmaximums vor das zweite Siegelkraftmaximum wird erreicht, dass die Siegelkraft zu Beginn des Siegelprozesses lediglich auf ein relativ geringes Niveau ansteigt, wobei dieses Siegelkraftniveau ausreicht, um die Wärme aus den Schweißbacken in das Material des Folienschlauchs einzukoppeln. Erst wenn der Folienschlauch auf ein ausreichendes Maß erwärmt ist, steigt die Siegelkraft dann bis zum zweiten Siegelkraftmaximum an und wird mit der gewünschten Schweißnahtqualität verschweißt. Durch die Reduktion der Siegelkraft im ersten Teil des Siegelprozesses bis zum Anfang des zweiten Siegelkraftmaximums kann ein erheblicher Anteil der Antriebsenergie zur Aufbringung der Siegelkraft eingespart werden. Außerdem kann der Antrieb zum Antrieb der Siegelbacken, der zur Aufbringung der Siegelkraft notwendig ist, entsprechend schwächer dimensioniert werden, woraus sich eine leichtere Bauweise und eine höhere Antriebsdynamik ergibt.

Die Untersuchungen hinsichtlich der Qualität der Siegelnähte hat interessanterweise ergeben, dass die Siegelqualität der Schweißnaht im Wesentlichen von der Einhaltung der Siegelkraft während des zweiten Siegelkraftmaximums abhängt, wohingegen die Einwirkzeit der Siegelkraft des zweiten Siegelkraftmaximums nur einen sehr geringen Einfluss hat. Dies bedeutet mit anderen Worten, dass auch bei nur sehr kurzzeitiger Aufbringung der Siegelkraft des zweiten Siegelkraftmaximums eine sehr gute Siegelqualität erreichbar ist. Erfindungsgemäß ist deshalb vorgesehen, dass die Siegelkraft des zweiten Siegelkraftmaximums von einer kurzzeitigen Kraftspitze gebildet wird. Diese kurzzeitige Kraftspitze und der damit kurzzeitige Druckimpuls reichen aus, um eine Siegelnaht mit ausreichender Siegelqualität zu erzeugen.

Weiterhin ist erfindungsgemäß vorgesehen, dass die Siegelkraft des zweiten Siegelkraftmaximums als kurzzeitige Kraftspitze durch kurzeitigen Überlastbetrieb des Antriebs der Schweißbacken erzeugt wird. Die Leistung des Antriebs im Überlastbetrieb sollte dabei oberhalb der Maximalleistung des Antriebs im Dauerlastbetrieb liegen. Im Ergebnis ist es dadurch ermöglicht den Antrieb der Schweißbacken auf ein geringeres Belastungsniveau auszulegen, da die kurzzeitige Kraftspitze zum Versiegeln der Siegelnaht durch einen kurzzeitigen Überlastbetrieb erzielt werden kann. Konventionelle Antriebsmotoren und die zugehörige Leistungselektronik sind in der Regel hinsichtlich einer kurzzeitigen Überlast tolerant, so dass die Antriebseinheit entsprechend mit einem geringeren Belastungsniveau ausgelegt werden kann und dadurch auch leichter und kostengünstiger wird.

Um die Siegelkraft des zweiten Siegelkraftmaximums in möglichst kurzer Zeit erreichen zu können, nachdem die Folie des Folienschlauchs ausreichend erwärmt ist, sollte die Steigung der Flanke an der Siegelkraftkurve unmittelbar vor Erreichen des zweiten Siegelkraftmaximums der maximalen Leistung des Antriebs im Überlastbetrieb entsprechen.

In welchem Verhältnis die Siegelkraft des ersten Siegelkraftmaximums zur Siegelkraft des zweiten Siegelkraftmaximums steht, ist grundsätzlich beliebig, solange die Siegelkraft des zweiten Siegelkraftmaximums jedenfalls höher als die Siegelkraft des ersten Siegelkraftmaximums ist. Als besonders vorteilhaft hat sich erwiesen, wenn die Siegelkraft des ersten Siegelkraftmaximums im Bereich von 30 bis 70 % der Siegelkraft des zweiten Siegelkraftmaximums liegt. Insbesondere vorteilhaft ist es, wenn die Siegelkraft des ersten Siegelkraftmaximums ungefähr die Hälfte der Siegelkraft des zweiten Siegelkraftmaximums beträgt und somit im Bereich von 45 % bis 55 % liegt.

In welcher Weise die Siegelkraftkurve zwischen dem ersten Siegelkraftmaximum und dem zweiten Siegelkraftmaximum verläuft, ist grundsätzlich beliebig. Gemäß einer bevorzugten Verfahrensvariante wird die Siegelkraft nach Erreichen des ersten Siegelkraftmaximums für eine Haltezeit im Wesentlich konstant gehalten, wobei diese konstante Kraft der Siegelkraft des ersten Siegelkraftmaximums entspricht.

Die Haltezeit während der die Siegelkraft auf dem Niveau des ersten Siegelkraftmaximums konstant gehalten wird, sollte bevorzugt erst dann enden, wenn das Material des Folienschlauchs zumindest teilweise aufgeschmolzen ist. Zu diesem Zeitpunkt kann dann der Siegelkraftprozess durch Steigerung der Siegelkraft bis hin zum zweiten Siegelkraftmaximum fortgesetzt und dadurch eine Siegelnaht mit hoher Schweißqualität erzeugt werden.

Das erfindungsgemäße Verfahren ist durch die Siegelkraft des ersten Siegelkraftmaximums und die darüberliegende Siegelkraft des zweiten Siegelkraftmaximums charakterisiert. Um diese beiden Parameter variabel auf verschiedene Randbedingungen, insbesondere auf verschiedene Folienmaterialien anpassen zu können, sollte die Siegelkraft des ersten Siegelkraftmaximums und/oder die Siegelkraft des zweiten Siegelkraftmaximums in der Antriebssteuerung variabel einstellbar sein. Dadurch kann der Siegelkraftkurvenverlauf variabel auf die verschiedenen Randbedingungen, insbesondere auf die unterschiedlichen Folienmaterialien angepasst werden.

Weiterhin ist es besonders vorteilhaft, wenn die Verfahrenszeit bis zum Erreichen des Siegelkraftmaximums und/oder die Verfahrenszeit bis zum Erreichen des zweiten Siegelkraftmaximums und/oder die Haltezeit in der Antriebssteuerung variabel einstellbar sind, um den Siegelkraftverlauf optimal an die Verfahrensrandbedingungen anpassen zu können.

Der Verlauf der Siegelkraftkurve nach Durchlaufen des zweiten Siegelkraftmaximums ist grundsätzlich beliebig. Beispielsweise ist es denkbar, dass danach weitere Siegelkraftmaxima durchlaufen werden. Nach einer ersten bevorzugten Verfahrensvariante ist es vorgesehen, dass die Siegelkraft nach Durchlaufen des zweiten Siegelkraftmaximums durch Öffnen der Schweißbacken auf Null gebracht wird, das bedeutet mit anderen Worten, dass die Siegelkraft nach Durchlaufen des zweiten Siegelkraftmaximums in kurzer Zeit auf Null abfällt.

Alternativ zu dieser ersten Verfahrensvariante ist es auch denkbar, dass die Siegelkraft nach Durchlaufen des zweiten Siegelkraftmaximums auf einen Zwischenwert abgesenkt und dann konstant gehalten wird. Am Ende dieser Konstantkraftphase, bei der die Siegelkraft auf dem Zwischenwert gehalten wird, wird die Siegelkraft dann wieder durch Öffnen der Schweißbacken auf Null gebracht.

Das vorgeschlagene Verfahren eignet sich insbesondere für getaktet arbeitende vertikale Schlauchbeutelmaschinen. Bei einer derartigen Verpackungsmaschine können die beiden Schweißbacken einer Quersiegelstation entlang einer linienförmigen Bahn bewegt werden. Dabei ist es bevorzugt, dass die Schweißbacken entlang der geschlossenen Bahn bewegt werden, die einen geraden Abschnitt aufweist, wobei entlang dieses geraden Abschnittes bei bewegtem Folienschlauch die mit ihm bewegten Schweißbacken den Folienschlauch verschweißen.

Im Folgenden werden das vorgeschlagene Verfahren und eine nach dem vorgeschlagenen Verfahren betreibbare vertikale Schlauchbeutelmaschine an Hand von einem Ausführungsbeispiel darstellender Figuren näher beschrieben. Es zeigen:
- **Fig. 1:**: in einer Seitenansicht eine vertikale Schlauchbeutelmaschine mit gegeneinander bewegbaren Schweißbacken einer Quersiegelstation;
- **Fig. 2:**: in einer Seitenansicht zwei senkrecht zueinander wirkende Antriebe zum Bewegen eines Bewegungspunktes A der einen Schweißbacke der Fig. 1 entlang einer umlaufenden Bahn;
- **Fig. 3:**: in einer schematischen Darstellung den Umlauf zweier gegeneinander bewegbarer, entlang eines effektiven Siegelweges den Folienschlauch der Fig. 1 verschweißenden Schweißbacken, welche in einem Aufprallpunkt P gegeneinander stoßen;
- **Fig. 4:**: in einer schematischen Darstellung den Schweißbackenumlauf entsprechend Fig. 3, jedoch mit einem um eine Vorwärmstrecke und eine Kühlstrecke reduzierten effektiven Siegelweg, und einem anderen Aufprallpunkt P;
- **Fig. 5:**: in einem Diagramm den bekannten, mit herkömmlicher Technik erzielten funktionellen Zusammenhang zwischen der Zeit und dem Siegeldruck für Schweißbacken einer Quersiegelstation einer vertikalen Schlauchbeutelmaschine;
- **Fig. 6:**: in einem Diagramm ein erfindungsgemäßes Siegelkraftprofil.

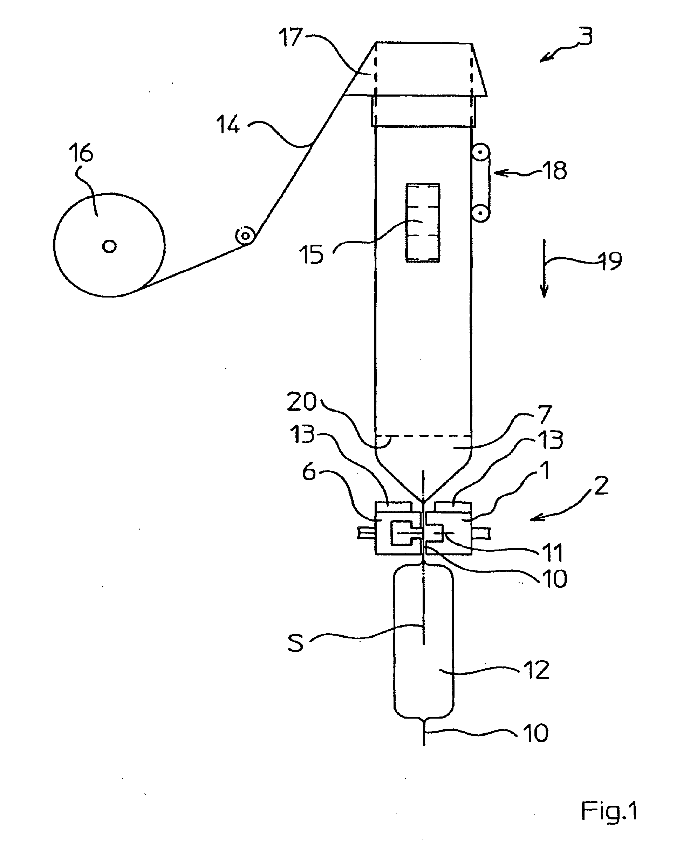

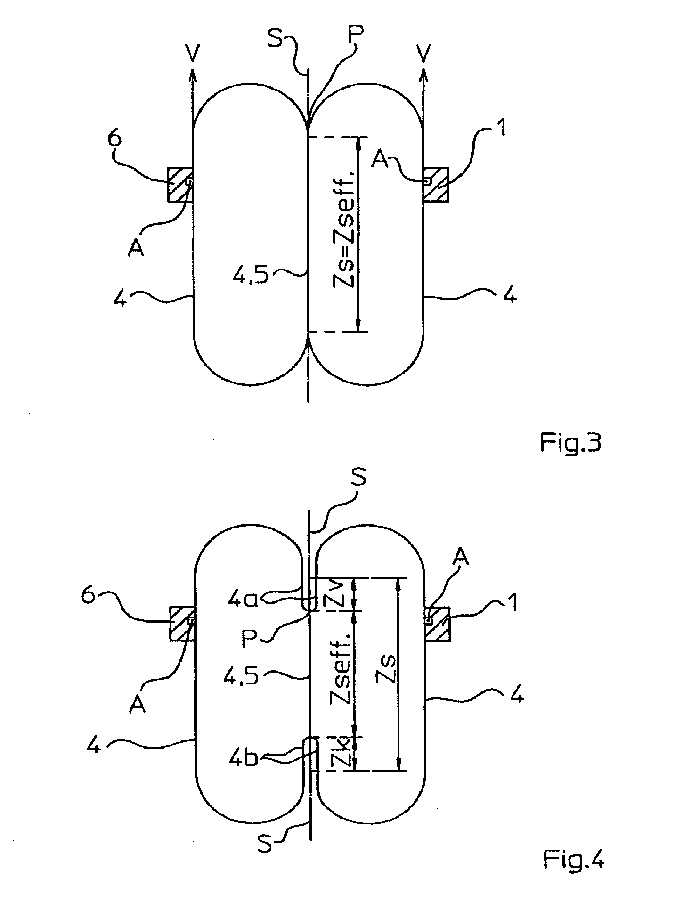

Bei einer vertikalen Schlauchbeutelmaschine 3 wird eine Folienbahn 14 mittels eines Abzuges 15 von einer Vorratsrolle 16 abgezogen, über eine Formschulter 17 gezogen und dabei zu einem Folienschlauch 7 geformt (Fig. 1). Der Folienschlauch 7 wird mittels einer Längssiegeleinrichtung 18 in Transportrichtung 19 verschweißt und durch ein Füllrohr 20 befüllt. Zwei gegeneinander bewegbare, umlaufende Schweißbacken 1, 6 dienen dazu den Folienschlauch 7 quer zur Transportrichtung 19 mittels Quernähten 10 zu verschweißen. Eine Trenneinrichtung 11 in einer Schweißbacke 1 dient dazu, jeweils einen Schlauchbeutel 12 mit einer bestimmten Beutellänge vom Folienschlauch 7 abzutrennen. Die Schweißbacken 1, 6 werden derart betrieben, dass sie gegenläufig umlaufen, um längs eines effektiven Siegelweges Zseff die Verschweißung des mit gleicher Geschwindigkeit wie die Schweißbacken 1 , 6 nach unten bewegten Folienschlauch 7 auszuführen (Fig. 3). Beide Schweißbacken 1, 6 werden dazu entlang einer jeweils geschlossenen Bahn 4 bewegt. Jede Bahn 4 weist einen geraden Abschnitt 5 auf, welcher zum Anliegen an dem zwischen den Schweißbacken 1, 6 zusammengedrückten Folienschlauch 7 vorgesehen ist. Dabei werden der Folienschlauch 7 und die Schweißbacken 1, 6 in Richtung des geraden Abschnittes 5 mit konstanter Geschwindigkeit weiterbewegt, um den Folienschlauch 7 durch die Wärmeinwirkung der Schweißbacken 1, 6 innerhalb einer Siegelzeit ts zu verschweißen.

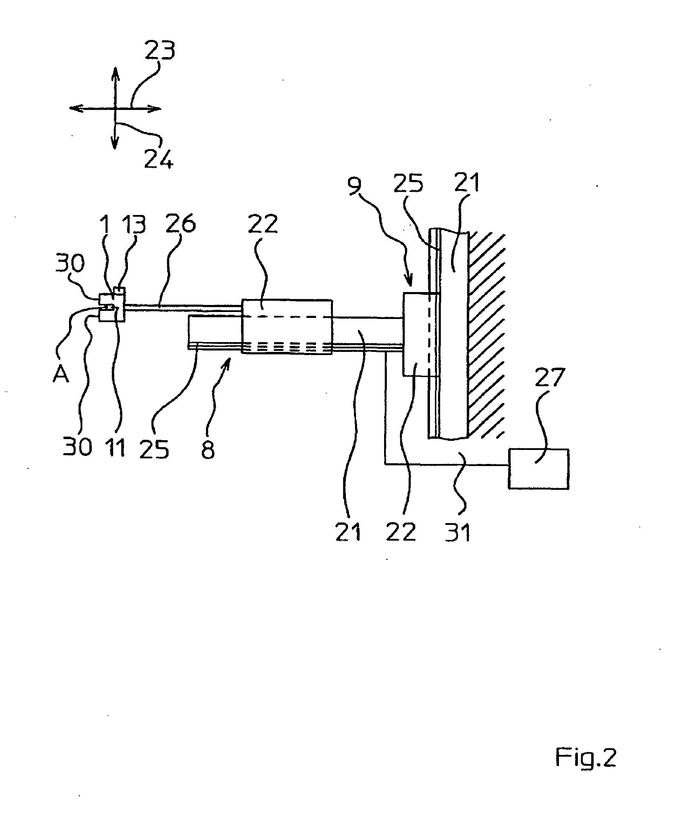

Es könnte aber auch ein Siegelweg Zs vorgegeben werden, welcher sich aus einer Vorwärmstrecke Zv für ein Vorwärmen des Gegenstandes mit vom Gegenstand beabstandeter Schweißbacke 1, dem eigentlichen, effektiven Siegelweg Zseff und einer Kühlstrecke Zk zum Abkühlen des Gegenstandes bei vom Gegenstand beabstandeter Schweißbacke 1, währenddessen Kühlluft von einem an der Schweißbacke 1 vorgesehenen Kühlluftauslass 13 auf den Gegenstand geblasen wird, zusammensetzt (Fig. 4). Damit diese Umstellung der Siegelwege Zs mit allen Orts- und Zeitparametern in einfacher Weise möglich ist, wurde für die Vorwärmstrecke Zv, den effektiven Siegelweg Zseff und die Kühlstrecke Zk jeweils ein bezüglich seiner Länge und seinen Ortskoordinaten frei wählbarer, parallel zum geraden Abschnitt 5 verlaufender Abschnitt 4a, 5, 4b vorgesehen, auf dem sich der Bewegungspunkt A entlang bewegt. Dazu werden die Antriebe 8, 9 (Fig. 2) derart betrieben, dass entlang einer Bahnkrümmung beide Antriebe 8 , 9 gleichzeitig betrieben werden und entlang eines geraden Abschnittes 4a, 5 , 4b nur der Antrieb 9 genutzt wird, damit einem Bewegungspunkt A der Schweißbacke 1, 6 in jedem die Bahn 4 beschreibenden Punkt frei ausgewählt, eine vorgegebene Geschwindigkeit V und eine vorgegebene Beschleunigung a in Richtung einer frei gewählten Bewegungsrichtung des Bewegungspunktes A zugeordnet wird. D. h. die geraden Abschnitte 4a, 5, 4b, sowie ihre genauen Längen und Ortskoordinaten können frei programmiert werden. An genau vorgegebenen Orten können also genau vorgegebene Geschwindigkeiten und, aus Gründen eines ruhigen Backenumlaufes, auch genau vorgegebene Beschleunigungen für die Schweißbacken 1, 6 vorgegeben werden. Auch die Rücksetzzeit zum erneuten Ansetzen der Schweißbacken 1, 6 an den Folienschlauch 7 und die Zykluszeit (Zeit für einen Backenumlauf) können frei ausgewählt werden. Eine entsprechende Software bringt die vorgewählten Parameter in die gewünschte Abhängigkeit und informiert über nicht zusammenpassende Eingaben.

Damit der Bewegungspunkt A ortsgenau bewegt werden kann, sind zum Bewegen der Schweißbacken 1, 6 jeweils zwei als elektromagnetischer Linearantrieb ausgestaltete, senkrecht zueinander wirkende Antriebe 8, 9 vorgesehen. Statt der Linearantriebe sind aber auch beliebige andere Antriebskonfigurationen, insbesondere mit Getriebemotoren, denkbar. Diese Antriebe 8, 9 sind mit einer Steuereinrichtung 27 (über eine Leitung 31) verbunden. Zur Vermeidung irgendeiner Ortsungenauigkeit sind zum einen beide Antriebe 8, 9 getriebelos miteinander und mit einer Schweißbacke 1, 6 verbunden. Zum anderen sind ortsverändernde Elastizitäten dadurch vermieden, dass jede Schweißbacke 1 , 6 über eine starre Verbindung 26 mit dem beweglichen Teil 22 des horizontal wirkenden Antriebs 8 verbunden ist, und dass das antreibende Teil 21 dieses Antriebs 8 mit dem in vertikaler Richtung beweglichen Teil 22 des anderen Antriebs 9 starr verbunden ist. Die frei wählbaren Ortskoordinaten erlauben in jedem Punkt der Bahn 4 eine ideale Backenbewegung, auch bei relativ kompliziertem Bahnverlauf.

Ein Aufeinanderprallen der Siegelflächen 30 der Schweißbacken 1, 6 geschieht jeweils in einem Aufprallpunkt P (Fig. 3, Fig. 4), ab dem ein effektiver Siegelweg Zseff beginnt. Dieser Aufprallpunkt P liegt in einer Siegelebene S. Um ein sanftes Aufeinanderstoßen der Siegelflächen 30 und damit den Aufbau einer Siegelkraft (Fs) zu erreichen, wird die Normalkomponente VN eines jeweils in einer Siegelflächenebene mittig oder außermittig liegenden Bewegungspunktes A durch entsprechendes Ansteuern der beiden Antriebe 8, welche jeweils eine Schweißbacke 1, 6 in Normalrichtung bewegen, von der Steuereinrichtung 27, die über jeweils eine Leitung 31 (Fig. 2) mit jeweils einem antreibenden Teil 21 eines Antriebs 8 verbunden ist, gesteuert.

Die Siegelkraft Fs wird von einer Steuereinrichtung 27 einer Kraftsteuerung des Antriebs 8 während der Siegelzeit ts vorgegeben. Dabei wird im Falle eines getakteten Folientransportes jede Schweißbacke 1, 6 entlang einer linienförmigen Bahn bewegt, und bei Folienstillstand und am Folienschlauch 7 anliegenden Schweißbacken 1, 6 während der Siegelzeit ts eine zeitabhängige Siegelkraft Fs von der Steuereinrichtung 27 vorgegeben. Alternativ dazu wird bei kontinuierlichem Folientransport jede Schweißbacke 1, 6 entlang einer geschlossenen Bahn 4 bewegt, welche einen geraden Abschnitt 5 aufweist, entlang dessen bei bewegtem Folienschlauch 7 die mit ihm mitbewegte Schweißbacke 1, 6 den Folienschlauch 7 verschweißt, wobei die Siegelkraft Fs während der Siegeldauer zeitabhängig von der Steuereinrichtung 27 vorgegeben wird. Innerhalb der Siegeldauer wird dabei ein Siegelkraftprofil erreicht, da der die Normalkomponente und die Siegelkraft Fs erzeugende Antrieb 8 mit der Steuereinrichtung 27 verbunden ist, welche einen zeitlichen Verlauf für die Leistungsaufnahme des Antriebs 8 und damit die Siegelkraft 27 vorgibt. Dabei spielt es keine Rolle, ob die Leistungsaufnahme an sich oder eine mit ihr korrelierte Größe gesteuert und sodann zeitabhängig bis zum Erreichen der Siegelzeit ts geregelt wird.

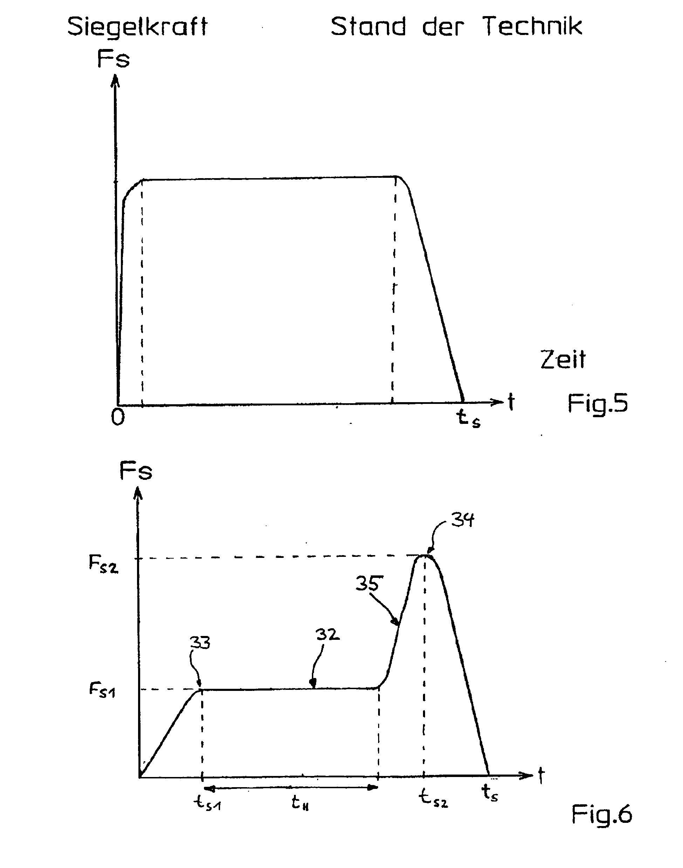

Beim bekannten Stand der Technik (Fig. 5) hat die Siegelkraftkurve einen nahezu rechteckförmigen Verlauf. Die Siegelkraft steigt steil bis zu ihrem Maximalwert an und wird dort für bestimmte Siegelzeit konstant gehalten. Am Ende der Siegelzeit werden die Backen dann wieder geöffnet und die Siegelkraft fällt auf den Wert Null. Durch diesen aus dem Stand der Technik bekannten Siegelkraftverlauf wird ein hohes Maß an Energie verschwendet, da die hohe Siegelkraft zu Beginn des Siegelprozesses für die Erzielung einer guten Siegelqualität nicht erforderlich ist. Denn für das Einkopplen der notwendigen Wärme in das Material des Folienschlauches reicht eine weit geringere Presskraft aus.

Fig. 6 zeigt den Verlauf der Siegelkraftkurve bei einer beispielhaften Ausführungsform des erfindungsgemäßen Verfahrens. Demgemäß steigt erfindungsgemäß die Siegelkraftkurve zunächst bis zur Siegelkraft Fs1 bei einem ersten relativen Siegelkraftmaximum 33. Sobald dieses erste Siegelkraftmaximum 33 angefahren ist, wird die Siegelkraft für eine Haltezeit tH konstant gehalten. Am Ende der Haltezeit tH wird die Siegelkraft 32 dann bis zur Siegelkraft Fs2 des zweiten Siegelkraftmaximums 34 gesteigert. Die Dauer der Haltezeit tH ist dabei so abgestimmt, dass die zu verschweißende Folie bei Erreichen des Endes der Haltezeit tH zumindest teilweise aufgeschmolzen ist. Das Siegelkraftmaximum 34 bildet eine kurzzeitige Kraftspitze, die sich in einem kurzzeitigen Maximaldruckimpuls auf die Folie überträgt. Zur Erzeugung dieser kurzzeitigen Kraftspitze des Siegelkraftverlaufes beim zweiten Siegelkraftmaximum wird der Antrieb 8 bzw. der Antrieb 9 der beiden Schweißbacken kurzzeitig im Überlastbetrieb betrieben, so dass die Antriebe 8 und 9 in ihrem Normalbetrieb entsprechend schwächer dimensioniert werden können. Nach Durchlaufen des zweiten Siegelkraftmaximums 34 werden die Schweißbacken 1 und 6 auseinander gefahren und die Siegelkraft 32 fällt dadurch auf den Wert Null. Um das Siegelkraftmaximum 34 nach Ende der Haltezeit tH möglichst schnell auf das zweite Siegelkraftmaximum 34 zu steigern, entspricht die Steigung der Flanke 35 an der Siegelkraftkurve 32 unmittelbar vor Erreichen des zweiten Siegelkraftmaximums der maximalen Leistung des Antriebs 8 bzw. 9 im Überlastbetrieb.

## Patentansprüche

1. Verfahren zum Erzeugen einer Schweißkraft bzw. eines Schweißdruckes für eine Schweißbacke (1, 6), wobei die Schweißbacke (1, 6) entlang einer geschlossenen Bahn (4) umlaufend oder entlang einer linienförmigen Bahn (29) hin- und herbewegt wird, um gegen einen Widerstand zu stoßen, wobei ein Folienschlauch (7) zwischen dem Widerstand und zumindest einer Spiegelfläche (30) der Schweißbacke (1, 6) zusammengedrückt wird, um den Folienschlauch (7) mittels über die Siegelfläche (30) in den Folienschlauch (7) eingebrachter Wärme bei einem ausgeübten Druck in einer Siegelebene (S) unter einer Siegelkraft (Fs) innerhalb einer Siegelzeit (ts) zu verschweißen, und wobei zumindest ein Antrieb (8, 9) dazu vorgesehen ist, die Schweißbacke (1, 6) in einer Normalrichtung zu einer Oberfläche des Widerstandes hin zu bewegen, um derart den Schweißvorgang ortsfest oder entlang eines effektiven Siegelweges (Zseff) innerhalb der Siegelzeit (ts) durchzuführen, und wobei die Siegelkraft (Fs) oder ein mit der Siegelkraft (Fs) korrelierender Siegelparameter von einer Steuereinrichtung (27) während der Siegelzeit (ts) derart vorgegeben wird, dass die Siegelkraft (Fs) innerhalb der Siegelzeit (ts) entlang einer Siegelkraftkurve (32) verläuft, wobei die Siegelkraftkurve (32) ein erstes relatives Siegelkraftmaximum (33) mit einer Siegelkraft (Fs1) und zumindest ein zweites relatives Siegelkraftmaximum (34) mit einer Siegelkraft (Fs2) aufweist, wobei die Siegelkraft (Fs2) beim zweiten Siegelkraftmaximum (34) höher ist als die Siegelkraft (Fs1) beim ersten Siegelkraftmaximum (33),
**dadurch gekennzeichnet,**
**dass** die Siegelkraft (Fs2) des zweiten Siegelkraftmaximums (34) von einer kurzzeitigen Kraftspitze durch kurzzeitigen Überlastbetrieb des Antriebs (8, 9) der Schweißbacke (1, 6) erzeugt wird.

2. Verfahren nach Anspruch 1,
**dadurch gekennzeichnet,**
**dass** die Siegelkraft (Fs1) des ersten Siegelkraftmaximums (33) im Bereich von 30 bis 70 % der Siegelkraft (Fs2) des zweiten Siegelkraftmaximums (34) liegt.

3. Verfahren nach Anspruch 1 oder 2,
**dadurch gekennzeichnet,**
**dass** die Steigung der Flanke (35) an der Siegelkraftkurve (32) unmittelbar vor Erreichen des zweiten Siegelkraftmaximums (34) der maximalen Leistung des Antriebs (8, 9) im Überlastbetrieb entspricht.

4. Verfahren nach einem der Ansprüche 1 bis 3,
**dadurch gekennzeichnet,**
**dass** die Siegelkraft (Fs) nach Erreichen des ersten Siegelkraftmaxi-mums (33) für eine Haltezeit (tH) im Wesentlichen konstant bei der Siegelkraft (Fs1) des ersten Siegelkraftmaximums (33) gehalten wird.

5. Verfahren nach Anspruch 4,
**dadurch gekennzeichnet,**
**dass** die Haltezeit (tH) erst endet, wenn das Material des Folienschlauchs (7) zumindest teilweise aufgeschmolzen ist.

6. Verfahren nach einem der Ansprüche 1 bis 5,
**dadurch gekennzeichnet,**
**dass** die Siegelkraft (Fs1) des ersten Siegelkraftmaximums (33) und/oder die Siegelkraft (Fs2) des zweiten Siegelkraftmaximums (34) in der Antriebssteuerung variabel einstellbar ist.

7. Verfahren nach einem der Ansprüche 1 bis 6,
**dadurch gekennzeichnet,**
**dass** die Zeit (ts1) bis zum Erreichen des ersten Siegelkraftmaximums (33) und/oder die Zeit (ts1) bis zum Erreichen des zweiten Siegelkraftmaximums (34) und/oder die Haltezeit (tH) in der Antriebssteuerung variabel einstellbar ist.

8. Verfahren nach einem der Ansprüche 1 bis 7,
**dadurch gekennzeichnet,**
**dass** die Siegelkraft (Fs) nach Durchlaufen des zweiten Siegelkraftmaximums (34), durch Öffnen der Schweißbacken (1, 6) auf Null gebracht wird.

9. Verfahren nach einem der Ansprüche 1 bis 7,
**dadurch gekennzeichnet,**
**dass** die Siegelkraft (Fs) nach Durchlaufen des zweiten Siegelkraftmaximums (34) auf einen Zwischenwert abgesenkt und dann gehalten wird und erst danach durch Öffnen der Schweißbacken (1, 6) auf Null gebracht wird.

10. Verfahren nach einem der Ansprüche 1 bis 9,
**dadurch gekennzeichnet,**
**dass** die Schweißbacken (1, 6) entlang einer geschlossenen Bahn (4) bewegt werden, die einen geraden Abschnitt (5) aufweist, entlang dessen bei bewegtem Folienschlauch (7) die mit ihm mitbewegten Schweißbacken (1, 6) den Folienschlauch (7) verschweißen.

## Claims

1. A method for creating a welding force or welding pressure for a welding jaw (1, 6), wherein the welding jaw (1, 6) is moved back and forth along a closed track (4) in a circumferential fashion or along a linear track (29) in order to abut against a resistance element, wherein a film tube (7) is compressed between the resistance element and at least one of the sealing surfaces (30) of the welding jaw (1, 6), in order to weld the film tube (7) shut by means of heat being applied to the film tube (7) via the sealing surface (30), at an exerted pressure in a sealing plane (S) under a sealing force (Fs) within a sealing time (ts), and wherein at least one drive (8, 9) is provided for moving the welding jaw (1, 6) in a normal direction towards one of the surfaces of the resistance element, in order to perform the welding process in this manner in a stationary position or along an effective sealing path (Zseff) within the sealing time (ts), and wherein the sealing force (Fs) or a sealing parameter which correlates with the sealing force (Fs) is predetermined by a control unit (27) during the sealing time (ts), in such a manner that the sealing force (Fs) runs along a sealing force curve (32) within the sealing time (ts),
wherein the sealing force curve (32) has a first relative sealing force maximum (33) with a sealing force (Fs1), and has at least one second relative sealing force maximum (34) with a sealing force (Fs2), wherein the sealing force (Fs2), at the second sealing force maximum (34), is higher than the sealing force (Fs1) at the first sealing force maximum (33),
**characterised in that**
the sealing force (Fs2) of the second sealing force maximum (34) is created by a temporary force peak due to temporary overload operation of the drive (8, 9) of the welding jaw (1, 6).

2. The method according to claim 1,
**characterised in that**
the sealing force (Fs1) of the first sealing force maximum (33) is in the range of 30% to 70% of the sealing force (Fs2) of the second sealing force maximum (34).

3. The method according to claim 1 or 2,
**characterised in that**
the slope of the flank (35) on the sealing force curve (32) corresponds to the maximum power of the drive (8, 9) in overload operation immediately before reaching the second sealing force maximum (34).

4. The method according to any one of claims 1 to 3,
**characterised in that**
after having reached the first sealing force maximum (33), the sealing force (Fs) is held essentially constantly at the sealing force (Fs1) of the first sealing force maximum (33) for a holding time (tH).

5. The method according to claim 4,
**characterised in that**
the holding time (tH) ends only when the material of the film tube (7) is at least partially fused.

6. The method according to any one of claim 1 to 5,
**characterised in that**
the sealing force (Fs1) of the first sealing force maximum (33) and/or the sealing force (Fs2) of the second sealing force maximum (34) is/are variably adjustable in the drive control unit.

7. The method according to any one of claims 1 to 6,
**characterised in that**
the time (ts1) until reaching the first sealing force maximum (33) and/or the time (ts1) until reaching the second sealing force maximum (34) and/or the holding time (tH) is/are variably adjustable in the drive control unit.

8. The method according to any one of claims 1 to 7,
**characterised in that**
after having passed through the second sealing force maximum (34), the sealing force (Fs) is brought to zero by opening the welding jaws (1, 6).

9. The method according to any one of claims 1 to 7,
**characterised in that**
after having passed through the second sealing force maximum (34), the sealing force (Fs) is reduced to an interim value and is then held there and is only thereafter brought to zero by opening the welding jaws (1, 6).

10. The method according to any one of claims 1 to 9,
**characterised in that**
the welding jaws (1, 6) are moved along a closed track (4), which has a straight section (5), along which the welding jaws (1, 6), moving together with the film tube (7), weld the film tube (7) shut while the latter is moving.

## Revendications

1. Procédé de génération d'une force de soudage ou pression de soudage pour une mâchoire (1, 6) de soudage, dans lequel la mâchoire (1, 6) de soudage est manoeuvrée d'avant en arrière le long d'une voie (4) fermée sur toute la périphérie ou le long d'une voie (29) linéaire afin de buter contre un élément de résistance, dans lequel un film tubulaire (7) est comprimé entre l'élément de résistance et au moins l'une des surfaces (30) de scellement de la mâchoire (1, 6) de soudage afin de fermer le film tubulaire (7) par soudage à l'aide de la chaleur appliquée au film (7) tubulaire en passant par la surface (30) de scellement, à une pression exercée dans un plan (S) de scellement sous une force (Fs) de scellement en un temps (ts) de scellement, et dans lequel au moins un entraînement (8, 9) est prévu pour manoeuvrer la mâchoire (1, 6) de soudage dans une direction normale vers l'une des surfaces de l'élément de résistance, afin d'exécuter le processus de soudage de cette manière dans une position fixe ou le long d'une course (Zseff) de scellement effective en le temps (ts) de scellement, et dans lequel la force (Fs) de scellement ou un paramètre de scellement étant en corrélation avec la force (Fs) de scellement est fixé par une unité (27) de commande pendant le temps (ts) de scellement, de telle manière que la force (Fs) de scellement passe le long d'une courbe (32) de force de scellement en le temps (ts) de scellement,
dans lequel la courbe (32) de force de scellement présente un premier maximum (33) relatif de force de scellement avec une force (Fs1) de scellement, et présente au moins un deuxième maximum (34) relatif de force de scellement avec une force (Fs2) de scellement, dans lequel la force (Fs2) de scellement, au deuxième maximum (34) de force de scellement, est supérieure à la force (Fs1) de scellement au premier maximum (33) de force de scellement,
**caractérisé en ce que**
la force (Fs2) de scellement du deuxième maximum (34) de force de scellement est générée par un pic de force temporel en vertu d'un fonctionnement en surcharge temporel de l'entraînement (8, 9) de la mâchoire (1, 6) de soudage.

2. Procédé selon la revendication 1,
**caractérisé en ce que**
la force (Fs1) de scellement du premier maximum (33) de force de scellement est dans la plage de 30% à 70% de la force (Fs2) de scellement du deuxième maximum (34) de force de scellement.

3. Procédé selon la revendication 1 ou 2,
**caractérisé en ce que**
la pente du flanc (35) sur la courbe (32) de force de scellement correspond à la puissance maximale de l'entraînement (8, 9) en fonctionnement en surcharge immédiatement avant d'atteindre le deuxième maximum (34) de force de scellement.

4. Procédé selon l'une quelconque des revendications 1 à 3,
**caractérisé en ce qu'**
après avoir atteint le premier maximum (33) de force de scellement, la force (Fs) de scellement est maintenue à la force (Fs1) de scellement du premier maximum (33) de force de scellement pour l'essentiel constamment pour un temps (tH) de maintien.

5. Procédé selon la revendication 4,
**caractérisé en ce que**
le temps (tH) de maintien se termine seulement quand le matériau du film (7) tubulaire est fondu au moins partiellement.

6. Procédé selon l'une quelconque des claims 1 to 5,
**caractérisé en ce que**
la force (Fs1) de scellement du premier maximum (33) de force de scellement et/ou la force (Fs2) de scellement du deuxième maximum (34) de force de scellement est/sont réglable(s) de façon variable dans l'unité de commande d'entraînement.

7. Procédé selon l'une quelconque des revendications 1 à 6,
**caractérisé en ce que**
le temps (ts1) jusqu'à atteindre le premier maximum (33) de force de scellement et/ou le temps (ts1) jusqu'à atteindre le deuxième maximum (34) de force de scellement et/ou le temps (tH) de maintien est/sont réglable(s) de façon variable dans l'unité de commande d'entraînement.

8. Procédé selon l'une quelconque des revendications 1 à 7,
**caractérisé en ce qu'**
après avoir passé le deuxième maximum (34) de force de scellement, la force (Fs) de scellement est abaissée à zéro en ouvrant les mâchoires (1, 6) de soudage.

9. Procédé selon l'une quelconque des revendications 1 à 7,
**caractérisé en ce qu'**
après avoir passé le deuxième maximum (34) de force de scellement, la force (Fs) de scellement est réduite à une valeur intermédiaire et est y maintenue ensuite, et ce ne qu'ensuite qu'elle est abaissée à zéro en ouvrant les mâchoires (1, 6) de soudage.

10. Procédé selon l'une quelconque des revendications 1 à 9,
**caractérisé en ce que**
les mâchoires (1, 6) de soudage sont manoeuvrées le long d'une voie (4) fermée qui présente une section (5) droite le long de laquelle les mâchoires (1, 6) de soudage ferment le film (7) tubulaire par soudage lors du mouvement du film, lesdites mâchoires mouvant avec le film (7) tubulaire.
